# EUROPEAN PATENT APPLICATION

(11) **EP 4 518 439 A1**
(43) Date of publication of application: **05.03.2025**
(21) Application number: 24179331.4
(22) Date of filing: 31.05.2024
(51) Int. Cl.: H04W 48/16, G01S 5/02, G01S 19/45, G01S 19/48, H04W 64/00, H04W 84/12

(54) **SYSTEMS AND METHODS OF ADJUSTING WIRELESS COMMUNICATION CONFIGURATIONS ACCORDING TO LOCATION**

(30) Priority: 31.08.2023 US 202363536014 P; 25.03.2024 US 202418615557
(71) Applicant: Meta Platforms Technologies, LLC, Menlo Park, CA 94025 (US)
(72) Inventor: Zhang, Zhenyu, Menlo Park (US); Wu, Songping, Menlo Park (US)
(74) Representative: Murgitroyd & Company

(57) **Abstract**

Disclosed herein are systems and method for selecting and applying configurations for wireless communications of a UE device based on a location. The system can include a processor to detect a wireless network of an access point (AP) configured to support wireless communication according to a plurality of configurations. The processor can identify, based at least on a plurality of weights for a plurality of modes for geolocation determination, a mode of the plurality of modes corresponding to a weight of the plurality of weights. The processor can determine a geolocation of the AP using the mode and the weight and select, based at least on the geolocation of the AP, a configuration of the plurality of configurations to use for wireless communication with the AP.

## Description

### FIELD OF DISCLOSURE

The present disclosure is generally related to facilitating wireless communication, including but not limited to configuration adjustment for chipset logging on a wireless communication device.

### BACKGROUND

User equipment (UE) devices, such as smartphones, laptops, augmented reality (AR) or virtual reality (VR) head wearable displays (HWD), can be used for wireless communication with other network devices or services via cellular, or other wireless networks. Wireless communication can be implemented using a variety of network communication protocols and in a variety of regions. UE devices can include various circuitry for implementing wireless communication via external networks using region-specific configurations.

### SUMMARY

The present technical solutions are directed to systems and methods for adjusting configurations for wireless communication, such as WLAN band or power settings, based on location. UE devices can have multiple configurations that can be selected and used for wireless communications with different APs (e.g., APs for WLAN or base stations for cellular networks). These configurations however are often regulated based on the region, such as a country, in which the device is located. Deploying UE devices across these regions makes it challenging to identify suitable configurations for the UE devices. While UE device manufacturers can limit configurations to only those available everywhere, doing so restricts options and precludes UE devices from selecting the most suitable configuration (e.g., WLAN configuration) for their individual use. These technical solutions provide the UE devices with the functionality to set up configurations based on their locations, which can be determined using different location detection methodologies.

At least one aspect of the technical solutions is directed to a wireless communication device. The device includes at least one processor configured to detect a wireless network of an access point (AP) (e.g., AP for WLAN, or base station for a cellular network) configured to support wireless communication according to a plurality of configurations. The at least one processor is further configured to identify, based at least on a plurality of weights for a plurality of modes for geolocation determination, a mode of the plurality of modes corresponding to a weight of the plurality of weights and determine a geolocation of the AP using the mode and the weight. The at least one processor is further configured to select, based at least on the geolocation of the AP, a configuration of the plurality of configurations to use for wireless communication with the AP.

The at least one processor may be configured to detect a signal of the wireless network of the AP that includes a wireless local area network (WLAN) device or a cellular network device; and select, from the plurality of modes, one or more modes responsive to the detection of the signal. The plurality of modes can include at least two of: a mode for geolocation determination using a navigation satellite system, a mode for geolocation determination using a code received from a cellular network, a mode for geolocation determination using a WLAN positioning system, a mode for geolocation determination using an internet protocol (IP) address of the wireless communication device and a mode for geolocation determination using a Bluetooth signal.

The at least one processor may be configured to determine one or more weights of the plurality of weights using at least one of: a strength of a signal of at least one of navigation satellite system or a cellular network, an error rate of the signal of at least one of the navigation satellite system or the cellular network, or access to a WLAN positioning system or an internet protocol (IP) address. The at least one processor may be configured to identify, based on the plurality of weights, a second mode of the plurality of modes corresponding to a second weight of the plurality of weights; and determine the geolocation of the AP using the second mode and the second weight.

The at least one processor may be configured to select, based at least on the geolocation of the AP, for the configuration, a communication band of a plurality of communication bands; and configure the wireless communication device according to the configuration to use the communication band for wireless communication between the wireless communication device and the AP. The at least one processor may be configured to select, based at least on the geolocation of the AP, for the configuration, a channel of a plurality of channels of a communication band; and configure the wireless communication device according to the configuration to use the channel for wireless communication between the wireless communication device and the AP.

The at least one processor may be configured to select, based at least on the geolocation of the AP, for the configuration, a power level from a plurality of power levels for transmission of wireless communications; and configure the wireless communication device according to the configuration to transmit communications of the wireless communication device to the AP at the power level. The wireless communication device can be one of: a smart glasses device, a head wearable device, a smartphone device, a mobile hotspot device, or a wireless access point.

At least one aspect of the technical solutions is directed to a method. The method includes detecting, by one or more processors of a wireless communication device, a wireless network of an access point (AP) configured to support wireless communication according to a plurality of configurations. The method further includes identifying, by the one or more processors, based at least on a plurality of weights for a plurality of modes for geolocation determination, a mode of the plurality of modes corresponding to a weight of the plurality of weights and determining, by the one or more processors, a geolocation of the AP using the mode and the weight. The method further includes selecting, by the one or more processors, based at least on the geolocation of the AP, a configuration of the plurality of configurations to use for wireless communication with the AP.

The method can include detecting, by the one or more processors, a signal of the wireless network of the AP that includes a wireless local area network (WLAN) device or a cellular network device; and selecting, by the one or more processors, from the plurality of modes, one or more modes responsive to the detection of the signal. The plurality of modes can include at least two of: a mode for geolocation determination using a navigation satellite system, a mode for geolocation determination using a code received from a cellular network, a mode for geolocation determination using a WLAN positioning system, a mode for geolocation determination using an internet protocol (IP) address of the wireless communication device and a mode for geolocation determination using a Bluetooth signal.

The method can include determining, by the one or more processors, one or more weights of the plurality of weights using at least one of: a strength of a signal of at least one of navigation satellite system or a cellular network, an error rate of the signal of at least one of the navigation satellite system or the cellular network, or access to a WLAN positioning system or an internet protocol (IP) address. The method can include identifying, by the one or more processors, based on the plurality of weights, a second mode of the plurality of modes corresponding to a second weight of the plurality of weights; and determining, by the one or more processors, the geolocation of the AP using the second mode and the second weight.

The method can include selecting, by the one or more processors, based at least on the geolocation of the AP, for the configuration, a communication band of a plurality of communication bands; and configuring, by the one or more processors, the wireless communication device according to the configuration to use the communication band for wireless communication between the wireless communication device and the AP. The method can include selecting, by the one or more processors, based at least on the geolocation of the AP, for the configuration, a channel of a plurality of channels of a communication band; and configuring, by the one or more processors, the wireless communication device according to the configuration to use the channel for wireless communication between the wireless communication device and the AP.

The method can include selecting, by the one or more processors, based at least on the geolocation of the AP, for the configuration, a power level from a plurality of power levels for transmission of wireless communications; and configuring, by the one or more processors, the wireless communication device according to the configuration to transmit communications of the wireless communication device to the AP at the power level. The wireless communication device may be one of: a smart glasses device, a head wearable device, a smartphone device, a mobile hotspot device, or a wireless access point.

At least an aspect of the technical solutions is directed to a non-transitory computer-readable media having processor readable instructions, such that, when executed, cause a processor to detect a wireless network of an access point (AP) configured to support wireless communication according to a plurality of configurations; identify, based at least on a plurality of weights for a plurality of modes for geolocation determination, a mode of the plurality of modes corresponding to a weight of the plurality of weights; determine a geolocation of the AP using the mode and the weight; and select, based at least on the geolocation of the AP, a configuration of the plurality of configurations to use for wireless communication with the AP.

The computer readable instruction can be such that, when executed, cause the processor to detect a signal of the wireless network of the AP that includes a Wireless Fidelity (Wi-Fi) device. The computer readable instruction can be such that, when executed, cause the processor to select, from the plurality of modes, one or more modes responsive to the detection of the signal. The plurality of modes can include at least two of: a mode for geolocation determination using a navigation satellite system, a mode for geolocation determination using a code received from a cellular network, a mode for geolocation determination using a WLAN positioning system, a mode for geolocation determination using an internet protocol (IP) address of the wireless communication device and a mode for geolocation determination using a Bluetooth signal.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing.
FIG. 1 is a diagram of an example wireless communication system, according to an example implementation of the present disclosure.
FIG. 2 is a diagram of a console and a head wearable display for presenting augmented reality or virtual reality, according to an example implementation of the present disclosure.
FIG. 3 is a diagram of a head wearable display, according to an example implementation of the present disclosure.
FIG. 4 is a block diagram of a computing environment according to an example implementation of the present disclosure.
FIG. 5 is a block diagram of an example system for selecting and applying configurations for wireless communications of a UE device based on the region in which the UE is located.
FIG 6 illustrates an example of a UE device with a geolocation function for determining location identifiers using various types of geolocation modes.
FIG. 7, illustrates an example flow diagram of a method for updating configuration of a UE device based on a fetched location of the UE device is illustrated.
FIG. 8 illustrates an example flow diagram of a method for selecting and applying configurations for wireless communications of a UE based on the region in which the UE device is located.

### DETAILED DESCRIPTION

Before turning to the figures, which illustrate certain embodiments in detail, it should be understood that the present disclosure is not limited to the details or methodology set forth in the description or illustrated in the figures. It should also be understood that the terminology used herein is for the purpose of description only and should not be regarded as limiting.

These technical solutions are directed to selecting and using wireless communication configurations, such as wireless band, channel or power settings, based on the area or location of the UE or locations of devices in the vicinity (e.g., within the WLAN range) of the UE device. Regulations tied to regions in which the UE devices are deployed can restrict the availability of some of the wireless configurations, such as WLAN configurations for use with WLAN access points (e.g., Wi-Fi routers), making the configuration selection process more challenging. For instance, regional wireless communication configuration regulations can make it challenging for UE devices to identify and use the most appropriate configurations for a particular circumstance. While manufacturers of UE devices may opt to limit the wireless communication configurations to only those that are universally applicable across all of the regions, this approach restricts the range of available configurations in situations in which UE devices may utilize more suitable options.

To address these challenges, the present technical solutions provide a functionality that allows the UE devices to establish wireless communication configurations based on the location (e.g., region or country) of the UE device, which can be determined using various location detection modes or techniques. The technical solutions can utilize weights for different modes of location detection to improve the location detection accuracy and reliability, allowing the UE device to more reliably select, from a broadest available selection of configurations, a configuration that is most desirable or suitable for the UE device to use. Using these solutions, UE devices can take action to dynamically adapt their wireless communication configurations based on a variety of regionally regulated wireless networks, such as WLAN or cellular networks, in order to increase their communication quality, reliability and performance, based on the location of the UE device.

The technical solutions can be directed to dynamic reconfiguration or adjustment of WLAN bands or channels used for WLAN communication. For instance, cellular network and Wi-Fi-configured communication devices, such as smart glasses, smartphones and AR/VR products, can face challenges with respect to the utilization of wireless communication bands, such as Wi-Fi bands that can vary based on the region or the country in which the device operates. For example, the Unlicensed National Information Infrastructure (UNII) can include various frequency bands allocated for unlicensed use, with UNII-1 being one such band. In some regions, UNII-1 can be restricted for outdoor access point (AP) device usage. For instance, various performance factors, such as Wi-Fi transmit power, can be subject to country-specific regulations. When devices lack the capability to ascertain the country in which they are being used, such devices can operate using minimal performance indicators, based on the common list of unregulated configurations, rather than optimal ones that may be more desirable to use.

To address these issues, present technical solutions allow for a location or region determination, such as a country code retrieval, that can affect different settings of LTE devices concerning band usage, power allocation, and other parameters or criteria. The technical solutions can identify UE equipment locations using various location detecting mechanism. These mechanisms can include, for instance, constellation devices such as Global Navigation Satellite Systems (GNSS), Mobile Country Codes (MCC), Wi-Fi Positioning Systems (WPS), and Internet Protocol (IP), which can be utilized individually, or in combination. The technical solutions can include gathering location-indicative information from a UE device itself or from device(s) connected to the UE device, thereby allowing for improved accuracy and reliability in determining the UE device's location.

The present solutions introduce a location fetching/determination technique for obtaining geographical data using one or more inputs from various sources that can have assigned weights or priorities. When a plurality of inputs is used, each input can be assigned a weight or priority based on the significance of the information they convey. The decision-making process can include applying weights to signals of one or more location detecting modes, such as that of the global positioning system (GPS) data, Mobile Country Code (MCC), IP address, and Wi-Fi Positioning System (WPS) information. Weights can correspond to the signal strength or validity and can be adjustable and denoted as [w1, w2, w3, w4]. These weights can be binary or fractional and may be adjusted dynamically, informed by the quality of data acquired through wireless communication and statistical analysis. Using this information, certain regionally controlled Wi-Fi bands, power allocations or other features can be unlocked and then used by the device, responsive to the device being within a particular geographical location.

For instance, in cases where GPS signals exhibit increased validity or strength, the weight assigned to GPS data (w1) could be set to 1, rendering other inputs inconsequential and thereby using only the GPS signal as the only mode for location detection. Alternatively, when GPS data displays moderate signal strength (e.g., having some a margin of error greater than a threshold) and MCC data also has a moderate strength signal, a balanced 50%/50% weight distribution can be designated for these two location detection modes to determine the country code. This decision-making process may not be restricted to one-time inputs and can include machine learning functions (e.g., models) to improve accuracy and effectiveness across multiple inputs over time. When utilizing Global Navigation Satellite Systems (GNSS), systems such as the GPS, Global Navigation Satellite System (GLONASS), Beidou Navigation Satellite System (Beidou) and others can be utilized if available and operational. MCC, accompanied by a Mobile Network Code (MNC), can be acquired through an on-device cellular receiver from a carrier, where the country code can be determined based on the initial digits of the phone number.

For example, a regional or country information can be obtained from WPS by scanning adjacent APs for Service Set Identifiers (SSIDs), Media Access Control (MAC) addresses, Received Signal Strength Indicators (RSSI), etc., following/using protocols such as those defined in IEEE 802.11d or 802.11az. These protocols can involve either proprietary or standardized methods such as 802.11az, utilizing RSSI/fingerprinting or Time of Flight (TOF) techniques from nearby APs with unique SSIDs. For instance, cross-referencing SSIDs with a database can assist in identifying a device's location, when there are recognizable APs (e.g., base stations, WLAN APs, transmission-reception points (TRPs)) nearby. Simplified procedures for obtaining regional or country codes, such as through fingerprinting services of APs, can suffice without employing full location determining (e.g., locationing) protocols. Bluetooth networks can serve a similar geo-location purpose, depending on regulatory approval.

Geo-location data can be acquired through various means: Internet access via smartphone, AP, or watch using WAN IP for IP-based geo-location. When a UE device connects to another device, such as a watch/band via other bands (e.g., 2.4GHz or 6GHz), the watch/band can utilize mobile MCC code or internet access to obtain and relay the IP-based country code. Similarly, when connected to an AP with internet access, the AP can pass to the UE device its IP-based country code. Initial connections to AP may occur through alternative bands like 2.4GHz to confirm country code before software AP operation in WLAN bands, such as UNII 1 & 2 bands. Wi-Fi chipset from vendors may dynamically update device geo-location, such as via its connected AP, with QCN7851 capability being an option. When connecting through other bands to a smartphone, the smartphone can utilize mobile MCC code, smartphone GPS, or internet access for IP-based country code. A manual approach can be utilized in which a user is prompted for location input, such as in instances in which no other solution is available.

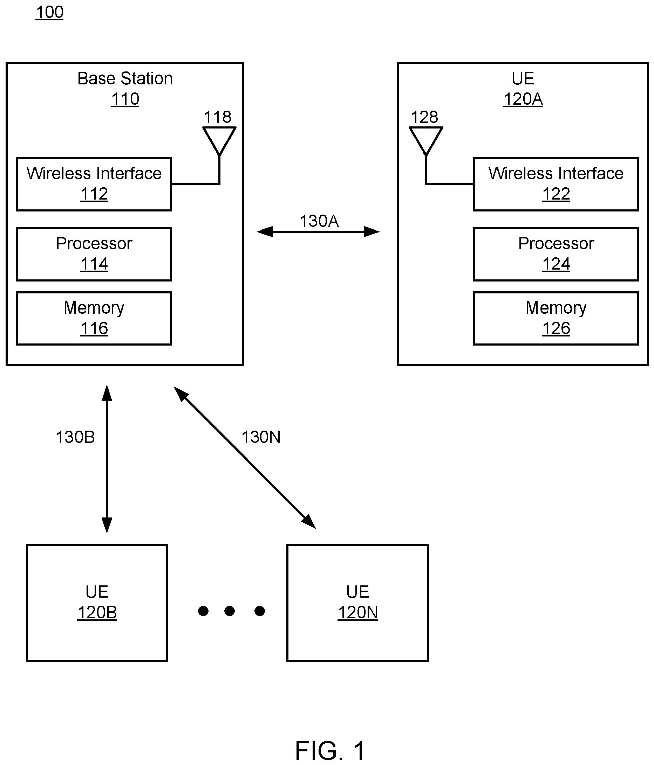

FIG. 1 illustrates an example wireless communication system 100. The wireless communication system 100 may include a base station 110 (also referred to as "a wireless communication node 110", "a BS 110", or "a station 110") and one or more user equipment (UEs) 120 (also referred to as "wireless communication devices 120" or "terminal devices 120"). The base station 110 and the UEs 120 may communicate through wireless commination links 130A, 130B, 130C. The base station 110 can be any base station, such as a cellular network base station or a wireless local area network (WLAN) base station (e.g., Wi-Fi access point). The wireless communication link 130 may be a cellular communication link conforming to 3G, 4G, 5G or other cellular communication protocols or a Wi-Fi communication protocol. In one example, the wireless communication link 130 supports, employs or is based on an orthogonal frequency division multiple access (OFDMA). In one aspect, the UEs 120 are located within a geographical boundary with respect to the base station 110 and may communicate with or through the base station 110. In some embodiments, the wireless communication system 100 includes more, fewer, or different components than shown in FIG. 1. For example, the wireless communication system 100 may include one or more additional base stations 110 than shown in FIG. 1.

Base station 110 can include any WLAN access point (AP) facilitating wireless connectivity between UE devices and the network infrastructure. Such a base station 110 (e.g., AP) can serve as a bridge for internet access or device-to-device communication. AP can extend network coverage to specific areas, allowing wireless transmission and reception. AP can operate independently or as part of a managed network. Base station 110 functioning can include, for example, a Wireless Fidelity (Wi-Fi) router, an enterprise access point, an outdoor access point, a mesh Wi-Fi system, a Hotspot access point, a wireless bridge access point or any other type and form of an AP.

Base station 110 can include any base station of a cellular network, facilitating wireless communication between mobile devices and the cellular network. Base station 110 can transmit and receive cellular signals within a designated coverage area, which can be referred to as a cell. Base stations for cellular networks can facilitate mobile services, such as voice calls, text messaging, and data connectivity. Interconnected with the cellular core network, base stations 110 can facilitate a seamless communication and continuous coverage across locations.

In some embodiments, the UE 120 may be a user device such as a mobile phone, a smart phone, a personal digital assistant (PDA), tablet, laptop computer, wearable computing device, etc. Each UE 120 may communicate with the base station 110 through a corresponding communication link 130. For example, the UE 120 may transmit data to a base station 110 through a wireless communication link 130 and receive data from the base station 110 through the wireless communication link 130. Example data may include audio data, image data, text, etc. Communication or transmission of data by the UE 120 to the base station 110 may be referred to as an uplink communication. Communication or reception of data by the UE 120 from the base station 110 may be referred to as a downlink communication. In some embodiments, the UE 120A includes a wireless interface 122, a processor 124, a memory device 126, and one or more antennas 128. These components may be embodied as hardware, software, firmware, or a combination thereof. In some embodiments, the UE 120A includes more, fewer, or different components than shown in FIG. 1. For example, the UE 120 may include an electronic display and/or an input device. For example, the UE 120 may include additional antennas 128 and wireless interfaces 122 than shown in FIG. 1.

The antenna 128 may be a component that receives a radio frequency (RF) signal and/or transmit a RF signal through a wireless medium. The RF signal may be at a frequency between 200 MHz to 100 GHz. The RF signal may have packets, symbols, or frames corresponding to data for communication. The antenna 128 may be a dipole antenna, a patch antenna, a ring antenna, or any suitable antenna for wireless communication. In one aspect, a single antenna 128 is utilized for both transmitting the RF signal and receiving the RF signal. In one aspect, different antennas 128 are utilized for transmitting the RF signal and receiving the RF signal. In one aspect, multiple antennas 128 are utilized to support multiple-in, multiple-out (MIMO) communication.

The wireless interface 122 includes or is embodied as a transceiver for transmitting and receiving RF signals through a wireless medium. The wireless interface 122 may communicate with a wireless interface 112 of the base station 110 through a wireless communication link 130A. In one configuration, the wireless interface 122 is coupled to one or more antennas 128. In one aspect, the wireless interface 122 may receive the RF signal at the RF frequency received through antenna 128, and downconvert the RF signal to a baseband frequency (e.g., 0~1 GHz). The wireless interface 122 may provide the downconverted signal to the processor 124. In one aspect, the wireless interface 122 may receive a baseband signal for transmission at a baseband frequency from the processor 124, and upconvert the baseband signal to generate a RF signal. The wireless interface 122 may transmit the RF signal through the antenna 128.

The processor 124 is a component that processes data. The processor 124 may be embodied as field programmable gate array (FPGA), application specific integrated circuit (ASIC), a logic circuit, etc. The processor 124 may obtain instructions from the memory device 126 and execute the instructions. In one aspect, the processor 124 may receive downconverted data at the baseband frequency from the wireless interface 122 and decode or process the downconverted data. For example, the processor 124 may generate audio data or image data according to the downconverted data, and present an audio indicated by the audio data and/or an image indicated by the image data to a user of the UE 120A. In one aspect, the processor 124 may generate or obtain data for transmission at the baseband frequency and encode or process the data. For example, the processor 124 may encode or process image data or audio data at the baseband frequency and provide the encoded or processed data to the wireless interface 122 for transmission.

The memory device 126 is a component that stores data. The memory device 126 may be embodied as random access memory (RAM), flash memory, read only memory (ROM), erasable programmable read-only memory (EPROM), electrically erasable programmable read-only memory (EEPROM), registers, a hard disk, a removable disk, a CD-ROM, or any device capable for storing data. The memory device 126 may be embodied as a non-transitory computer readable medium storing instructions executable by the processor 124 to perform various functions of the UE 120A disclosed herein. In some embodiments, the memory device 126 and the processor 124 are integrated as a single component.

In some embodiments, each of the UEs 120B... 120N includes similar components of the UE 120A to communicate with the base station 110. Thus, detailed description of duplicated portion thereof is omitted herein for the sake of brevity.

In some embodiments, the base station 110 may be an evolved node B (eNB), a serving eNB, a target eNB, a femto station, or a pico station. The base station 110 may be communicatively coupled to another base station 110 or other communication devices through a wireless communication link and/or a wired communication link. The base station 110 may receive data (or a RF signal) in an uplink communication from a UE 120. Additionally or alternatively, the base station 110 may provide data to another UE 120, another base station, or another communication device. Hence, the base station 110 allows communication among UEs 120 associated with the base station 110, or other UEs associated with different base stations. In some embodiments, the base station 110 includes a wireless interface 112, a processor 114, a memory device 116, and one or more antennas 118. These components may be embodied as hardware, software, firmware, or a combination thereof. In some embodiments, the base station 110 includes more, fewer, or different components than shown in FIG. 1. For example, the base station 110 may include an electronic display and/or an input device. For example, the base station 110 may include additional antennas 118 and wireless interfaces 112 than shown in FIG. 1.

The antenna 118 may be a component that receives a radio frequency (RF) signal and/or transmit a RF signal through a wireless medium. The antenna 118 may be a dipole antenna, a patch antenna, a ring antenna, or any suitable antenna for wireless communication. In one aspect, a single antenna 118 is utilized for both transmitting the RF signal and receiving the RF signal. In one aspect, different antennas 118 are utilized for transmitting the RF signal and receiving the RF signal. In one aspect, multiple antennas 118 are utilized to support multiple-in, multiple-out (MIMO) communication.

The wireless interface 112 includes or is embodied as a transceiver for transmitting and receiving RF signals through a wireless medium. The wireless interface 112 may communicate with a wireless interface 122 of the UE 120 through a wireless communication link 130. In one configuration, the wireless interface 112 is coupled to one or more antennas 118. In one aspect, the wireless interface 112 may receive the RF signal at the RF frequency received through antenna 118, and downconvert the RF signal to a baseband frequency (e.g., 0~1 GHz). The wireless interface 112 may provide the downconverted signal to the processor 124. In one aspect, the wireless interface 122 may receive a baseband signal for transmission at a baseband frequency from the processor 114, and upconvert the baseband signal to generate a RF signal. The wireless interface 112 may transmit the RF signal through the antenna 118.

The processor 114 is a component that processes data. The processor 114 may be embodied as FPGA, ASIC, a logic circuit, etc. The processor 114 may obtain instructions from the memory device 116 and executes the instructions. In one aspect, the processor 114 may receive downconverted data at the baseband frequency from the wireless interface 112 and decode or process the downconverted data. For example, the processor 114 may generate audio data or image data according to the downconverted data. In one aspect, the processor 114 may generate or obtain data for transmission at the baseband frequency and encode or process the data. For example, the processor 114 may encode or process image data or audio data at the baseband frequency and provide the encoded or processed data to the wireless interface 112 for transmission. In one aspect, the processor 114 may set, assign, schedule, or allocate communication resources for different UEs 120. For example, the processor 114 may set different modulation schemes, time slots, channels, frequency bands, etc. for UEs 120 to avoid interference. The processor 114 may generate data (or UL CGs) indicating configuration of communication resources and provide the data (or UL CGs) to the wireless interface 112 for transmission to the UEs 120.

The memory device 116 is a component that stores data. The memory device 116 may be embodied as RAM, flash memory, ROM, EPROM, EEPROM, registers, a hard disk, a removable disk, a CD-ROM, or any device capable for storing data. The memory device 116 may be embodied as a non-transitory computer readable medium storing instructions executable by the processor 114 to perform various functions of the base station 110 disclosed herein. In some embodiments, the memory device 116 and the processor 114 are integrated as a single component.

In some embodiments, communication between the base station 110 and the UE 120 is based on one or more layers of Open Systems Interconnection (OSI) model. The OSI model may include layers including: a physical layer, a Medium Access Control (MAC) layer, a Radio Link Control (RLC) layer, a Packet Data Convergence Protocol (PDCP) layer, a Radio Resource Control (RRC) layer, a Non Access Stratum (NAS) layer or an Internet Protocol (IP) layer, and other layer.

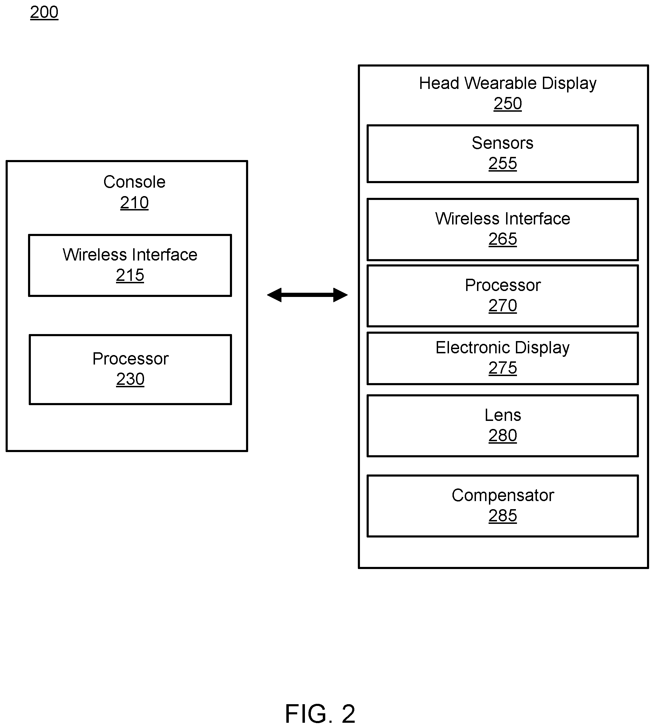

FIG. 2 is a block diagram of an example artificial reality system environment 200. In some embodiments, the artificial reality system environment 200 includes a HWD 250 worn by a user, and a console 210 providing content of artificial reality (e.g., augmented reality, virtual reality, mixed reality) to the HWD 250. Each of the HWD 250 and the console 210 may be a separate UE 120. The HWD 250 may be referred to as, include, or be part of a head mounted display (HMD), head mounted device (HMD), head wearable device (HWD), head worn display (HWD) or head worn device (HWD). The HWD 250 may detect its location and/or orientation of the HWD 250 as well as a shape, location, and/or an orientation of the body/hand/face of the user and provide the detected location/or orientation of the HWD 250 and/or tracking information indicating the shape, location, and/or orientation of the body/hand/face to the console 210. The console 210 may generate image data indicating an image of the artificial reality according to the detected location and/or orientation of the HWD 250, the detected shape, location and/or orientation of the body/hand/face of the user, and/or a user input for the artificial reality and transmit the image data to the HWD 250 for presentation. In some embodiments, the artificial reality system environment 200 includes more, fewer, or different components than shown in FIG. 2. In some embodiments, functionality of one or more components of the artificial reality system environment 200 can be distributed among the components in a different manner than is described here. For example, some of the functionality of the console 210 may be performed by the HWD 250. For example, some of the functionality of the HWD 250 may be performed by the console 210. In some embodiments, the console 210 is integrated as part of the HWD 250.

In some embodiments, the HWD 250 is an electronic component that can be worn by a user and can present or provide an artificial reality experience to the user. The HWD 250 may render one or more images, video, audio, or some combination thereof to provide the artificial reality experience to the user. In some embodiments, audio is presented via an external device (e.g., speakers and/or headphones) that receives audio information from the HWD 250, the console 210, or both, and presents audio based on the audio information. In some embodiments, the HWD 250 includes sensors 255, a wireless interface 265, a processor 270, an electronic display 275, a lens 280, and a compensator 285. These components may operate together to detect a location of the HWD 250 and a gaze direction of the user wearing the HWD 250 and render an image of a view within the artificial reality corresponding to the detected location and/or orientation of the HWD 250. In other embodiments, the HWD 250 includes more, fewer, or different components than shown in FIG. 2.

In some embodiments, the sensors 255 include electronic components or a combination of electronic components and software components that detect a location and an orientation of the HWD 250. Examples of the sensors 255 can include: one or more imaging sensors, one or more accelerometers, one or more gyroscopes, one or more magnetometers, or another suitable type of sensor that detects motion and/or location. For example, one or more accelerometers can measure translational movement (e.g., forward/back, up/down, left/right) and one or more gyroscopes can measure rotational movement (e.g., pitch, yaw, roll). In some embodiments, the sensors 255 detect the translational movement and the rotational movement and determine an orientation and location of the HWD 250. In one aspect, the sensors 255 can detect the translational movement and the rotational movement with respect to a previous orientation and location of the HWD 250 and determine a new orientation and/or location of the HWD 250 by accumulating or integrating the detected translational movement and/or the rotational movement. Assuming for an example that the HWD 250 is oriented in a direction 25 degrees from a reference direction, in response to detecting that the HWD 250 has rotated 20 degrees, the sensors 255 may determine that the HWD 250 now faces or is oriented in a direction 45 degrees from the reference direction. Assuming for another example that the HWD 250 was located two feet away from a reference point in a first direction, in response to detecting that the HWD 250 has moved three feet in a second direction, the sensors 255 may determine that the HWD 250 is now located at a vector multiplication of the two feet in the first direction and the three feet in the second direction.

In some embodiments, the sensors 255 include eye trackers. The eye trackers may include electronic components or a combination of electronic components and software components that determine a gaze direction of the user of the HWD 250. In some embodiments, the HWD 250, the console 210 or a combination of them may incorporate the gaze direction of the user of the HWD 250 to generate image data for artificial reality. In some embodiments, the eye trackers include two eye trackers, where each eye tracker captures an image of a corresponding eye and determines a gaze direction of the eye. In one example, the eye tracker determines an angular rotation of the eye, a translation of the eye, a change in the torsion of the eye, and/or a change in shape of the eye, according to the captured image of the eye, and determines the relative gaze direction with respect to the HWD 250, according to the determined angular rotation, translation and the change in the torsion of the eye. In one approach, the eye tracker may shine or project a predetermined reference or structured pattern on a portion of the eye and capture an image of the eye to analyze the pattern projected on the portion of the eye to determine a relative gaze direction of the eye with respect to the HWD 250. In some embodiments, the eye trackers incorporate the orientation of the HWD 250 and the relative gaze direction with respect to the HWD 250 to determine a gate direction of the user. Assuming for an example that the HWD 250 is oriented at a direction 30 degrees from a reference direction, and the relative gaze direction of the HWD 250 is -10 degrees (or 350 degrees) with respect to the HWD 250, the eye trackers may determine that the gaze direction of the user is 20 degrees from the reference direction. In some embodiments, a user of the HWD 250 can configure the HWD 250 (e.g., via user settings) to enable or disable the eye trackers. In some embodiments, a user of the HWD 250 is prompted to enable or disable the eye trackers.

In some embodiments, the wireless interface 265 includes an electronic component or a combination of an electronic component and a software component that communicates with the console 210. The wireless interface 265 may be or correspond to the wireless interface 122. The wireless interface 265 may communicate with a wireless interface 215 of the console 210 through a wireless communication link through the base station 110. Through the communication link, the wireless interface 265 may transmit to the console 210 data indicating the determined location and/or orientation of the HWD 250, and/or the determined gaze direction of the user. Moreover, through the communication link, the wireless interface 265 may receive from the console 210 image data indicating or corresponding to an image to be rendered and additional data associated with the image.

In some embodiments, the processor 270 includes an electronic component or a combination of an electronic component and a software component that generates one or more images for display, for example, according to a change in view of the space of the artificial reality. In some embodiments, the processor 270 is implemented as a part of the processor 124 or is communicatively coupled to the processor 124. In some embodiments, the processor 270 is implemented as a processor (or a graphical processing unit (GPU)) that executes instructions to perform various functions described herein. The processor 270 may receive, through the wireless interface 265, image data describing an image of artificial reality to be rendered and additional data associated with the image and render the image to display through the electronic display 275. In some embodiments, the image data from the console 210 may be encoded, and the processor 270 may decode the image data to render the image. In some embodiments, the processor 270 receives from the console 210 in additional data, object information indicating virtual objects in the artificial reality space and depth information indicating depth (or distances from the HWD 250) of the virtual objects. In one aspect, according to the image of the artificial reality, object information, depth information from the console 210, and/or updated sensor measurements from the sensors 255, the processor 270 may perform shading, reprojection, and/or blending to update the image of the artificial reality to correspond to the updated location and/or orientation of the HWD 250. Assuming that a user rotated his head after the initial sensor measurements, rather than recreating the entire image responsive to the updated sensor measurements, the processor 270 may generate a small portion (e.g., 10 %) of an image corresponding to an updated view within the artificial reality according to the updated sensor measurements and append the portion to the image in the image data from the console 210 through reprojection. The processor 270 may perform shading and/or blending on the appended edges. Hence, without recreating the image of the artificial reality according to the updated sensor measurements, the processor 270 can generate the image of the artificial reality.

In some embodiments, the electronic display 275 is an electronic component that displays an image. The electronic display 275 may, for example, be a liquid crystal display or an organic light emitting diode display. The electronic display 275 may be a transparent display that allows the user to see through. In some embodiments, when the HWD 250 is worn by a user, the electronic display 275 is located proximate (e.g., less than 3 inches) to the user's eyes. In one aspect, the electronic display 275 emits or projects light towards the user's eyes according to image generated by the processor 270.

In some embodiments, the lens 280 is a mechanical component that alters received light from the electronic display 275. The lens 280 may magnify the light from the electronic display 275 and correct for optical error associated with the light. The lens 280 may be a Fresnel lens, a convex lens, a concave lens, a filter, or any suitable optical component that alters the light from the electronic display 275. Through the lens 280, light from the electronic display 275 can reach the pupils, such that the user can see the image displayed by the electronic display 275, despite the close proximity of the electronic display 275 to the eyes.

In some embodiments, the compensator 285 includes an electronic component or a combination of an electronic component and a software component that performs compensation to compensate for any distortions or aberrations. In one aspect, the lens 280 introduces optical aberrations such as a chromatic aberration, a pin-cushion distortion, barrel distortion, etc. The compensator 285 may determine a compensation (e.g., predistortion) to apply to the image to be rendered from the processor 270 to compensate for the distortions caused by the lens 280, and apply the determined compensation to the image from the processor 270. The compensator 285 may provide the predistorted image to the electronic display 275.

In some embodiments, the console 210 is an electronic component or a combination of an electronic component and a software component that provides content to be rendered to the HWD 250. In one aspect, the console 210 includes a wireless interface 215 and a processor 230. These components may operate together to determine a view (e.g., a FOV of the user) of the artificial reality corresponding to the location of the HWD 250 and the gaze direction of the user of the HWD 250 and can generate image data indicating an image of the artificial reality corresponding to the determined view. In addition, these components may operate together to generate additional data associated with the image. Additional data may be information associated with presenting or rendering the artificial reality other than the image of the artificial reality. Examples of additional data include, hand model data, mapping information for translating a location and an orientation of the HWD 250 in a physical space into a virtual space (or simultaneous localization and mapping (SLAM) data), eye tracking data, motion vector information, depth information, edge information, object information, etc. The console 210 may provide the image data and the additional data to the HWD 250 for presentation of the artificial reality. In other embodiments, the console 210 includes more, fewer, or different components than shown in FIG. 2. In some embodiments, the console 210 is integrated as part of the HWD 250.

In some embodiments, the wireless interface 215 is an electronic component or a combination of an electronic component and a software component that communicates with the HWD 250. The wireless interface 215 may be or correspond to the wireless interface 122. The wireless interface 215 may be a counterpart component to the wireless interface 265 to communicate through a communication link (e.g., wireless communication link). Through the communication link, the wireless interface 215 may receive from the HWD 250 data indicating the determined location and/or orientation of the HWD 250, and/or the determined gaze direction of the user. Moreover, through the communication link, the wireless interface 215 may transmit to the HWD 250 image data describing an image to be rendered and additional data associated with the image of the artificial reality.

The processor 230 can include or correspond to a component that generates content to be rendered according to the location and/or orientation of the HWD 250. In some embodiments, the processor 230 is implemented as a part of the processor 124 or is communicatively coupled to the processor 124. In some embodiments, the processor 230 may incorporate the gaze direction of the user of the HWD 250. In one aspect, the processor 230 determines a view of the artificial reality according to the location and/or orientation of the HWD 250. For example, the processor 230 maps the location of the HWD 250 in a physical space to a location within an artificial reality space and determines a view of the artificial reality space along a direction corresponding to the mapped orientation from the mapped location in the artificial reality space. The processor 230 may generate image data describing an image of the determined view of the artificial reality space and transmit the image data to the HWD 250 through the wireless interface 215. In some embodiments, the processor 230 may generate additional data including motion vector information, depth information, edge information, object information, hand model data, etc., associated with the image, and transmit the additional data together with the image data to the HWD 250 through the wireless interface 215. The processor 230 may encode the image data describing the image and can transmit the encoded data to the HWD 250. In some embodiments, the processor 230 generates and provides the image data to the HWD 250 periodically (e.g., every 11 ms).

In one aspect, the process of detecting the location of the HWD 250 and the gaze direction of the user wearing the HWD 250 and rendering the image to the user should be performed within a frame time (e.g., 11 ms or 16 ms). A latency between a movement of the user wearing the HWD 250 and an image displayed corresponding to the user movement can cause judder, which may result in motion sickness and can degrade the user experience. In one aspect, the HWD 250 and the console 210 can prioritize communication for AR/VR, such that the latency between the movement of the user wearing the HWD 250 and the image displayed corresponding to the user movement can be presented within the frame time (e.g., 11 ms or 16 ms) to provide a seamless experience.

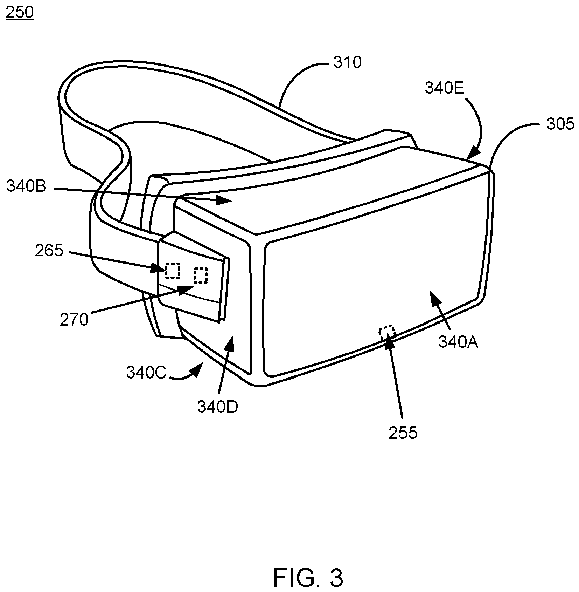

FIG. 3 is a diagram of a HWD 250, in accordance with an example embodiment. In some embodiments, the HWD 250 includes a front rigid body 305 and a band 310. The front rigid body 305 includes the electronic display 275 (not shown in FIG. 3), the lens 280 (not shown in FIG. 3), the sensors 255, the wireless interface 265, and the processor 270. In the embodiment shown by FIG. 3, the wireless interface 265, the processor 270, and the sensors 255 are located within the front rigid body 205 and may not be visible externally. In other embodiments, the HWD 250 has a different configuration than shown in FIG. 3. For example, the wireless interface 265, the processor 270, and/or the sensors 255 may be in different locations than shown in FIG. 3.

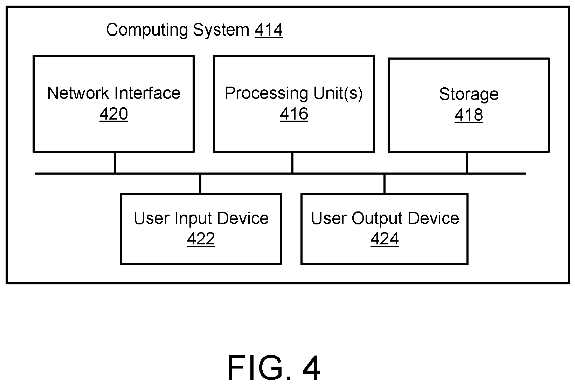

Various operations described herein can be implemented on computer systems. FIG. 4 shows a block diagram of a representative computing system 414 usable to implement the present disclosure. In some embodiments, the BS 110, the UE 120, the console 210, the HWD 250, which can include UE 120, can each be implemented by the computing system 414. Computing system 414 can be implemented, for example, as a consumer device such as a smartphone, other mobile phone, tablet computer, wearable computing device (e.g., smart watch, eyeglasses, head wearable display), desktop computer, laptop computer, or implemented with distributed computing devices. The computing system 414 can be implemented to provide VR, AR, MR experience. In some embodiments, the computing system 414 can include conventional computer components such as processors 416, storage device 418, network interface 420, user input device 422, and user output device 424.

Network interface 420 can provide a connection to a wide area network (e.g., the Internet) to which WAN interface of a remote server system is also connected. Network interface 420 can include a wired interface (e.g., Ethernet) and/or a wireless interface implementing various RF data communication standards such as Wi-Fi, Bluetooth, or cellular data network standards (e.g., 3G, 4G, 5G, 60 GHz, LTE, etc.).

The network interface 420 may include a transceiver to allow the computing system 414 to transmit and receive data from a remote device using a transmitter and receiver. The transceiver may be configured to support transmission/reception supporting industry standards that enables bi-directional communication. An antenna may be attached to transceiver housing and electrically coupled to the transceiver. Additionally or alternatively, a multi-antenna array may be electrically coupled to the transceiver such that a plurality of beams pointing in distinct directions may facilitate in transmitting and/or receiving data.

A transmitter may be configured to wirelessly transmit frames, slots, or symbols generated by the processor unit 416. Similarly, a receiver may be configured to receive frames, slots or symbols and the processor unit 416 may be configured to process the frames. For example, the processor unit 416 can be configured to determine a type of frame and to process the frame and/or fields of the frame accordingly.

User input device 422 can include any device (or devices) via which a user can provide signals to computing system 414; computing system 414 can interpret the signals as indicative of particular user requests or information. User input device 422 can include any or all of a keyboard, touch pad, touch screen, mouse or other pointing device, scroll wheel, click wheel, dial, button, switch, keypad, microphone, sensors (e.g., a motion sensor, an eye tracking sensor, etc.), and so on.

User output device 424 can include any device via which computing system 414 can provide information to a user. For example, user output device 424 can include a display screen to display images generated by or delivered to computing system 414. The display can incorporate various image generation technologies, e.g., a liquid crystal display (LCD), light-emitting diode (LED) including organic light-emitting diodes (OLED), projection system, cathode ray tube (CRT), or the like, together with supporting electronics (e.g., digital-to-analog or analog-to-digital converters, signal processors, or the like). A device such as a touchscreen that function as both input and output device can be used. Output devices 424 can be provided in addition to or instead of a display. Examples include indicator lights, speakers, tactile "display" devices, printers, and so on.

Some implementations include electronic components, such as microprocessors, storage and memory that store computer program instructions in a computer readable storage medium (e.g., non-transitory computer readable medium). Many of the features described in this specification can be implemented as processes that are specified as a set of program instructions encoded on a computer readable storage medium. When these program instructions are executed by one or more processors, they cause the processors to perform various operation indicated in the program instructions. Examples of program instructions or computer code include machine code, such as is produced by a compiler, and files including higher-level code that are executed by a computer, an electronic component, or a microprocessor using an interpreter. Through suitable programming, processor 416 can provide various functionality for computing system 414, including any of the functionality described herein as being performed by a server or client, or other functionality associated with message management services.

It will be appreciated that computing system 414 is illustrative and that variations and modifications are possible. Computer systems used in connection with the present disclosure can have other capabilities not specifically described here. Further, while computing system 414 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

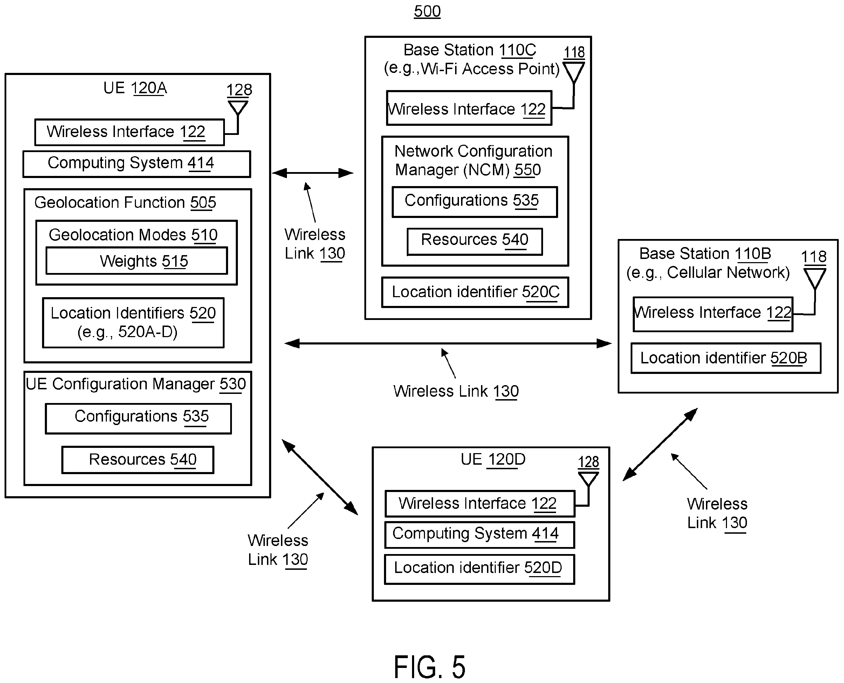

FIG. 5 illustrates an example system 500 for selecting and applying configurations for wireless communications of a UE 120 based on the region in which the UE 120 is located. Example system 500 can include a UE 120A communicating, via wireless links 130, to several network base stations or access points, such as base station (BS) 110B for a cellular wireless network and a BS 110C for a WLAN (e.g., Wi-Fi access point). UE 120A can also wirelessly communicate, via wireless link 130, with a UE 120D. UEs 120, such as UE 120A, can include one or more wireless interfaces 122 communicatively coupled with one or more antennas 128 for wireless communication via the wireless links 130. UE 120, such as UE 120A, can include one or more computing systems 414, geolocation functions 505 and UE configuration managers 530. Each geolocation function 525 can include one or more geolocation modes 510 that can have and apply weights 515 for prioritization of the location determinations by different geolocation modes 510. Geolocation functions 525 can include one or more location identifiers 520 (e.g., location identifiers 520A-D) which the UE 120A can individually generate (e.g., 520A) or receive from other wireless communication nodes (e.g., BSs 110B, 110C and UE 120D). Configuration manager 530 can include one or more configurations 535 and resources 540 which the configuration manager 530 can utilize to connect to the BSs 110 (e.g., BS 110B or BS 110C) that can be configured as their respective wireless network's access points.

BSs 110, such as BS 110B and BS 110C, can include any base stations configured to support and communicate via any wireless network. Wireless networks supported or provided by BSs 110 can include any wireless networks, including a WLAN such as a Wi-Fi network of BS 110C, a cellular network such as that of BS 110B, or a Bluetooth or any other wireless communication that can be used to connect, for example, with other UEs 120, such as UE 120D. BS 110C can include one or more wireless interfaces 122 communicatively coupled with one or more antennas 118 for wireless communications via wireless links of the BS 110C. BS 110C can include one or more network configuration managers (NCMs) 550 that can include one or more configurations 535C for configuring wireless network communications using resources 540. NCM 550 can include a location identifier 520C indicative of the geolocation (e.g., region) of the BS 110C, which the BS 110C can share with the UE 120A upon a request from the UE 120.

BS 110B can be configured as an access point for a cellular network to which the UEs 120 can connect. BS 110B can include one or more wireless interfaces 122 communicatively coupled with one or more antennas 118 for wireless communications via wireless links 130. BS 110B can include one or more location identifiers 520B indicative of the geolocation (e.g., region) of the BS 110B, which the BS 110B can share with the UE 120A upon a request.

UEs 120, such as UE 120A and UE 120D, can include any computing devices supporting or configured to utilize wireless communication via any wireless communication network. UEs 120 can include, for example, AR or VR devices, smartphones, or wearable devices, such as a smart watch that can be communicatively coupled with a smartphone. UEs 120 can include one or more wireless interfaces 122 that can be communicatively coupled with one or more antennas 128. UEs 120, such as UE 120A and UE 120D, can be in wireless communication via wireless links 130. As with UE 120A, UE 120D can include a computing system 414. UE 120D can include a location identifier 520D indicative of the location (e.g., region) of the UE 120D.

Geolocation function 505 can include any combination of hardware and software for determining the location of LTE 120 using information or data from nearby devices or wireless networks. Geolocation function 505 can utilize any combination of one or more geolocation modes 510 to determine the location (e.g., region, country, state, city or address) of a UE 120. Geolocation function 505 can utilize, for example, Global Navigation Satellite Systems (GNSS) systems, Mobile Country Code (MCC) from cellular networks, Wi-Fi Positioning System (WPS)-based methods from Wi-Fi APs, or IP-based techniques from same or different UEs 120 to pinpoint the geographical position of the UE device. For instance, geolocation function 505 can determine region of a UE 120 using any combination of a GNSS leverages satellite signals, MCC utilizing cellular network information, WPS-based methods involving nearby WLAN networks of Wi-Fi access points, and IP-based techniques of LTE or other devices. Geolocation function 505 can utilize weights 515 assigning priority or level of influence of some of the modes 510 over others in determining the geolocation of the UE 120.

Geolocation modes 510 can include any modes of determining geolocations of the UE 120. Geolocation modes 510 can include combination of hardware and software elements to allow the UE 120 to communicate with various systems, devices or networks to determine the UE 120's geolocation (e.g., region, area or a country). Geolocation mode 510 can include various geolocation methodologies, including for example Global Navigation Satellite Systems (GNSS), Mobile Country Code (MCC), Wi-Fi Positioning System (WPS) and IP-based techniques.

For instance, a geolocation mode 510 can include GNSS mode, having the functionality that utilizes signals from satellites to determine precise geographic coordinates of the UE 120. GNSS can provide data by triangulating signals from multiple satellites. Responsive to a signal or a message, GNSS can determine the UE 120's latitude, longitude, and altitude. For example, a Global Positioning System (GPS) can be used as the GNSS system to provide an accurate location information about the location of the UE 120.

For instance, a geolocation mode 510 can include a MCC mode that can use a cellular network communication or data to approximate the location of the UE 120, such as using a country code or an area code. For example, each country on the cellular networks can be assigned a unique MCC, allowing the network to infer the device's location (e.g., country or region) based on the MCC transmitted by the device. For instance, if a device connects to a cellular network and transmits an MCC corresponding to a specific country, the network can determine the device's approximate location within that country.

For instance, a geolocation mode 510 can include a WPS mode that can use communication or information of a nearby Wi-Fi access points to triangulate the device's position. For example, by measuring the signal strength and timing of signals from multiple APs, or a regional or country information, a WPS mode can estimate the UE 120's location. For example, if a device scans for nearby Wi-Fi networks and detects a signal from a known access point with a known location, the WPD mode can determine the region (e.g., country, state or area) of the UE 120.

For instance, a geolocation mode 510 can include an IP-based mechanism of a wireless device (e.g., UE 120 or BS 110) in which device's internet Protocol (IP) address is used to infer the location or region of the UE 120. For example, by mapping IP addresses to geographic locations, IP-based geolocation mode can determine the approximate physical location of the device (e.g., country, region, state, city). For instance, if a device connects to the internet and is assigned an IP address associated with a specific geographic region, IP-based geolocation can estimate the device's location based on the registered location of the IP address.

Weights 515 can include any values assigned to different data sources or modes of geolocation to indicate their relative importance or influence in achieving a final determination of the location for the UE 120. Weights 515 can include numbers or values that indicate the level of priority or a parameter of increased or decreased value with respect to other parameters. Weight 515 can be used to prioritize the contribution of each data source or mode 510, such as Global Navigation Satellite Systems (GNSS), Mobile Country Code (MCC), Wi-Fi Positioning System (WPS), or IP-based techniques, based on factors, such as accuracy, reliability, and availability of their respective signals. By adjusting the weights 515 assigned to each mode 510, geolocation function 505 can combine the data from multiple geolocation modes 510 to produce a more accurate and reliable location estimates for the UE 120. For instance, geolocation function 505 can determine a geolocation (e.g., region or state) of a UE 120 based on GNSS signal and MCC data, each of which can be equally weighted, while other geolocation modes 510 can be not considered. For instance, WPS mode 510 can be weighted 80%, while MCC can be weighted 20%. Any weights 515 can be applied to any modes 510, depending on circumstances, signal strength or reliability or other factors.

Location identifier 520 can include any data or information indicative of a location or a region in which UE 120 is located. Location identifier 520 can include an indicator of a country, a state, a region within a country or a state, a city, an address, or a coordinate location (e.g., GPS coordinate). Location identifiers 520 can be determined by various UE 120, including UE 120A and UE 120D, as well as base stations, including BS 110C (e.g., Wi-Fi AP), BS 110B (e.g., cellular network BS) or any other network node. Location identifiers 520 can be provided via communications of UE 120A with other devices. Location identifiers 520 can be determined using various geolocation modes 510 and can be prioritized (e.g., weighed using weights 515), based on signal quality or strength. For instance, in cellular networks, the UE 120 can measure the Received Signal Strength Indicator (RSSI) from nearby BS 110B, identify neighboring cells, and obtain Cell Global Identity (CGI) or Cell ID information. For example, in Wi-Fi networks, the UE 120 can scan for nearby BS 110 that are Wi-Fi APs, measure their signal strengths, and retrieve their unique identifiers such as BSSIDs (Basic Service Set Identifiers). For instance, UEs can exchange location-related information directly with other nearby UEs (e.g., exchange between UE 120A and UE 120D), such as through peer-to-peer communication or proximity detection techniques.

UE configuration manager 530 can include any combination of hardware and software of a UE 120 for facilitating or managing wireless communication configurations with a BS 110. UE configuration manager 530 can use location identifiers 520 to establish or facilitate most desirable or most suitable WLAN configurations 535 with BSs 110, such as BSs 110 including WLAN APs (e.g., Wi-Fi routers). By utilizing location identifiers 520 obtained from nearby network nodes, including BSs 110 of cellular or Wi-Fi networks or signals from other UEs 120, the UE configuration manager 530 can determine or identify the UE 120's geographical location or position (e.g., country, region, state, city, address or geographical location).

UE configuration manager 530 can use the data related to the location identifiers 520, such as the strength or reliability of the signal used to determine the presence of the neighboring wireless devices or APs (e.g., BSs 110) to use and connect with. UE configuration manager 530 can issue requests, signals or messages to such identified wireless devices to seek location identifiers 520 to use for identifying available configurations 535. For instance, UE configuration manager 530 can include the functionality to identify resources 540 of the UE 120 and can determine desired or most suitable WLAN bands, channels, transmission power settings, security settings or other configurations 535 to use to connecting with a WLAN configured BS 110C. For instance, UE configuration manager 530 can include the functionality to identify resources 540 of the UE 120 and determine desired or most suitable cellular bands, channels, transmission power settings, security settings or other configurations 535 to use to connecting with a cellular configured BS 110B.

UE configuration manager 530 can identify and select the most suitable configurations 535 from a group of available configurations 535. UE configuration manager 530 can configure the UE 120 for connections with the BSs 110 using the given configurations. UE configuration manager 530 can set up configuration parameters, such as channel selection, transmit power levels, and network authentication settings. By dynamically adapting configurations 535 based on real-time location or region identifying data, the UE configuration manager 530 improves the wireless communication performance, improved connectivity, and compliance with local regulations. UE configuration manager 530 can transmit, via wireless interface 122 and antenna 128, messages of recommended configurations 535 to the NCM 550 to request the NCM 550 establish the communications with the UE 120A according to the recommended configurations 535.

Configurations 535 can include any configurations or settings for establishing connections or communication sessions between UE 120 and base stations 110, including Wi-Fi access points, cellular network base stations or towers, Hotspot devices, Bluetooth devices, or any other wireless network devices. Configurations 535 can include settings for various communication parameters provided or facilitated in communication with access points. Configurations 535 can include wireless communication band assignment, selections or settings, channel assignment, selections, or settings, configurations or settings for transmit power control, various wireless communication security settings, roaming thresholds, Quality of Service (QoS) parameters, power-saving modes, and geolocation-based adjustments. UEs 120 can participate in selecting optimal wireless communication bands (e.g., frequency ranges) that can be customized or configured for particular WLAN communications (e.g., via WLAN configured BSs 110, such as Wi-Fi APs) or cellular communications (e.g., via cellular configured BSs 110). Configurations 535 can be used for identifying appropriate wireless communication channels to minimize interference, adjusting transmit power levels to optimize coverage, configuring security protocols to ensure secure communication, setting roaming thresholds for seamless transitions between APs, prioritizing traffic types to enhance network performance, enabling power-saving modes to conserve energy, and adhering to regulatory standards based on local regulation.

Resources 540 can include any elements or features of a wireless network connection that can be configured by a configuration 535. Resources 540 can include frequency bands, channels, transmission power levels, and various other network parameters. Resources 540 can include QoS parameters for routing or prioritizing network traffic, security protocols or encryption settings, roaming thresholds or settings, power-saving settings or modes or any other features or parameters for controlling wireless communication. For instance, resources 540 can include frequency bands (e.g., WLAN or cellular bands), such as 2.4 GHz and 5 GHz bands for WLAN, providing the spectrum for wireless communication and allowing for differentiation between different wireless traffic. Resources 540 can include communication channels within the bands allocate specific frequency ranges for data transmission, allowing multiple devices to operate concurrently without interference. Resources 540 can include transmission power levels determining the strength of signals transmitted by WLAN devices, influencing coverage area and signal propagation. Resources 540 can include network parameters such as security settings, QoS configurations, and roaming thresholds for setting up WLAN performance.

Network configuration manager (NCM) 550 can include any combination of hardware and software for base stations 110 to configure or establish settings or parameters for wireless communications with UEs 120. NCM 550 can configure various resources 540 on the BS 110 side, including frequency bands, channels, transmission power levels, QoS settings or parameters, encryption or security settings, roaming settings or parameters, or any other resource 540. NCM 550 can be configured to receive transmissions, signals or messages from UE configuration manager 530 indicative of the configurations 535 which the UE configuration manager 530 recommends, prefers or requests to implement. Responsive to the received communication from the UE configuration manager 530, the NCM 550 can select the recommended settings and establish the wireless communications based on the recommended configurations received from the UE configuration manager 530.

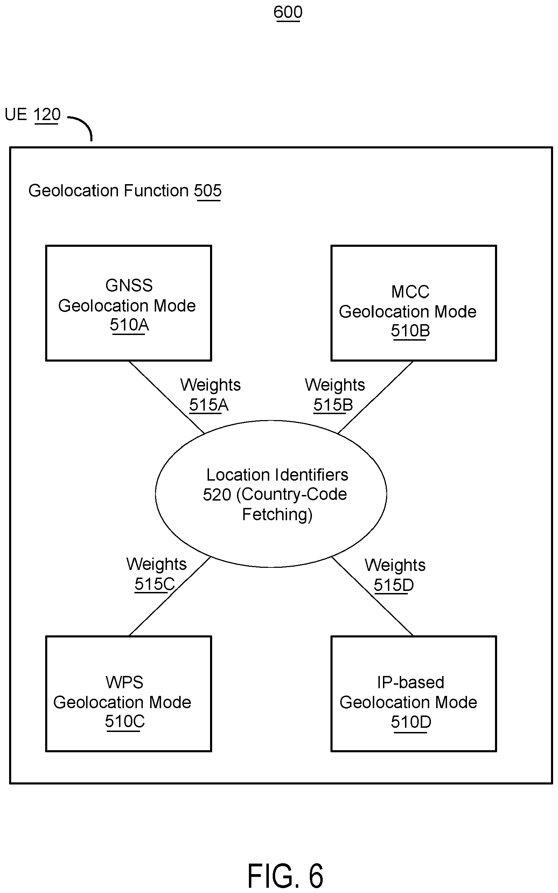

FIG 6 illustrates an example 600 of a UE 120 with a geolocation function 505 for determining location identifiers 520 using various types of geolocation modes 510. Geolocation function 505 can include: GNSS geolocation mode 510A whose location identifier 520 determinations can be adjusted according to weights 515A, a MCC geolocation mode 510B whose location identifier 520 determinations can be adjusted according to weights 515B, a WPS geolocation mode 510C whose location identifier 520 determinations can be adjusted according to weights 515C, and an IP-based geolocation mode 510D whose location identifier 520 determinations can be adjusted according to weights 515D.

GNSS geolocation mode 510A can include any combination of hardware and software for communicating with a navigation system, such as a Global Positioning System (GPS), to determine location identifier 520. GNSS geolocation mode 510A can exchange transmissions with a GPS system or other geolocation systems to acquire geolocation data or coordinates of the location of the UE 120. GNSS geolocation mode 510A determine the region or country in which the UE 120 is being utilized based on the received data. Determination of the location identifier 520 by the GNSS geolocation mode 510A can be modified, adjusted or subject to weights 515A, which can include values (e.g., between 0 and 1) to scale according to the priority, importance or reliability of this mode, which can be determined based on the reliability, availability or the strength of the GNSS signal or communication.

MCC geolocation mode S 10B can include any combination of hardware and software for communicating with a cellular network to receive a mobile country code (MCC) identifying the country in which the UE 120 resides. MCC geolocation mode 510B can exchange transmissions with a cellular network, or other networks that may have or use the MCC, to request and receive the MCC. MCC geolocation mode 510B can be configured to communicate with the cellular network or other networks to receive any other codes that can be indicative of the location of the cellular network or area, such as an area code, and address or any other location indicator. MCC geolocation mode 510B can determine the region or country in which the UE 120 is being utilized based on the received data. Determination of the location identifier 520 by the MCC geolocation mode 510B can be modified, adjusted or subject to weights 515B, which can include values (e.g., between 0 and 1) to scale according to the priority, importance or reliability of this mode, which can be determined based on the reliability, availability or the strength of the cellular or other network signal or communication.

WPS geolocation mode 510C can include any combination of hardware and software for communicating with one or more WLAN networks (e.g., Wi-Fi devices) to determine a location identifier 520. WPS geolocation mode 510C can exchange transmissions with one or more BSs 110 configured as Wi-Fi access points to acquire data indicative of the geolocation of the AP, such as the media access control (MAC) address or service set identifier (SSID). MAC address and SSID data can be used to determine the region or country in which the UE 120 is being utilized. Determination of the location identifier 520 by the WPS geolocation mode 510C can be modified, adjusted or subject to weights 515C, which can include values (e.g., between 0 and 1) to scale according to the priority, importance or reliability of this mode, which can be determined based on the reliability, availability or the strength of the WLAN signal or communication.

IP-based geolocation mode 510D can include any combination of hardware and software for communicating with networks, such as cellular or WLAN networks, to determine internet protocol (IP) address and IP-based geolocation data for determining location identifier 520. IP-based geolocation mode 510D can exchange transmissions with a one or more networks to query a geolocation service for the location of the IP address, such as the IP address of the device or the IP address of the network (e.g., Wi-Fi AP). IP-based geolocation mode 510D can determine the region or country in which the UE 120 is being utilized based on the received data. Determination of the location identifier 520 by the IP-based geolocation mode 510D can be modified, adjusted or subject to weights 515D, which can include values (e.g., between 0 and 1) to scale according to the priority, importance or reliability of this mode, which can be determined based on the reliability, availability or the strength of the signal or communication.

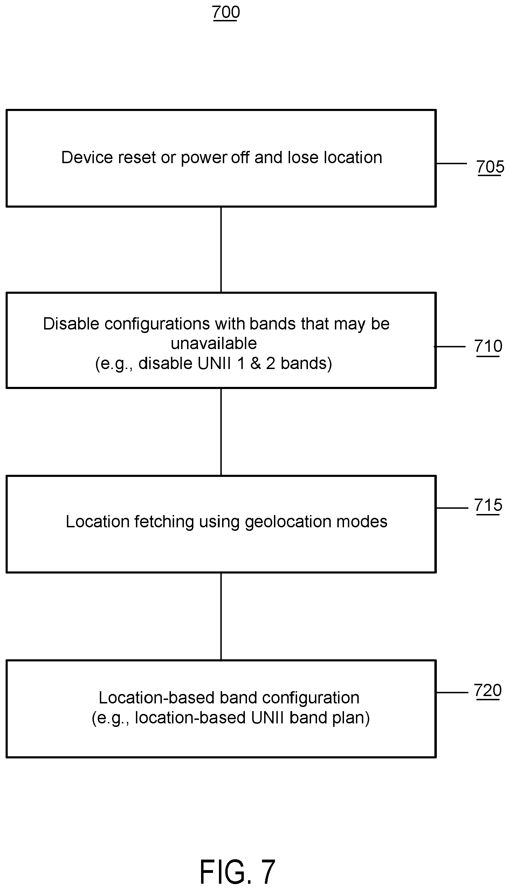

Turning now to FIG. 7, an example flow diagram of a method 700 for updating configuration of a UE device based on a fetched location of the UE device is illustrated. The method 700 can be performed by a system having one or more processors configured to perform operations of the system features and examples discussed in connection with FIGS. 1-6 by executing computer-readable instructions stored on a memory. The method can be implemented using a non-transitory computer readable medium storing instructions which, when executed by one or more processors, cause the one or more processors to implement operations of the method 700. For instance, the method 700 can be implemented one or more processors 112 or 416 of a computing system executing non-transitory computer-readable instructions stored on a memory (e.g., the memory 116).

The method 700 can be used by a UE 120 to acquire a location identifier from other network nodes. Method 700 can include operations 705-720. At operation 705, the method can include a UE device to perform a device reset, power off and/or lose its location. At operation 710, the method can include the UE disabling configurations with bands that may be unavailable. At operation 715, the method can include the UE fetching locations using geolocation modes. At operation 720, the method can utilize location-based band configuration.

At operation 705, the method can include a UE device performing a device reset, powering off and/or losing its location. For example, the UE device can implement a device reset or power off and can lose the location for the LTE. For instance, the UE may undergo a reset or power off sequence. When a user opens up a newly purchased UE or turns off their UE and then later restarts it, the device can reset and be unaware of its location at least initially upon the restart. For instance, if the device runs out of battery and powers off, the device may undergo a reset when powered back on.

At operation 710, the method can include the UE disabling configurations with bands that may be unavailable. Responsive to determining that the location of the UE is unknown, the UE can disable configurations that might be disabled in some regions and use only the configurations that are not regulated. For instance, the UE can have its configuration disabled for bands, such as WLAN bands UNII 1 & 2, responsive to a reset or power off and the UE identifying available Wi-Fi access points (APs) within its vicinity. The UE can disable configurations operating in the UNII 1 and UNII 2 bands or other bands channels or power levels that may be subject to regulation at some of the locations or areas.

At operation 715, the method can include the UE fetching locations using geolocation modes. UE can identify one or more UEs, WLAN access points or cellular base stations within the range of its antenna. UE can then initiate communications (e.g., using geolocation modes) to request information or data indicative of the location or region in which the UE is located. The UE can fetch location using any geolocation mode, including using IP, MAC or SSID requests of any nearby systems or data, receiving MCC from any WLAN or location data from a GNSS. For instance, any information from other UE devices, WLAN APs or cellular base stations, can be used to determine UE device's geographical position. This can involve utilizing various location determination methods such as GPS, Wi-Fi Positioning System (WPS), or IP-based geolocation. The UE may use GPS signals to triangulate its position or query a geolocation service based on its IP address.

At operation 720, the method can utilize location-based band configuration. Responsive to receiving information and determining geolocation of the LTE, UE can send a request to a wireless communication network (e.g., WLAN or cellular network) to reconfigure the communication using a preferred configuration, such as a configuration for WLAN bands UNII 1 and 2. With the location data obtained, the UE can communicate with a wireless network to apply a location-based UNI band plan. This can include configuring the device's UMTS NR UNI band based on its current location. For instance, if the UE determines that its location is in a region with specific regulatory restrictions or requirements regarding wireless frequency bands, the UE can adjust its UNI band plan to comply with local regulations and optimize network performance.

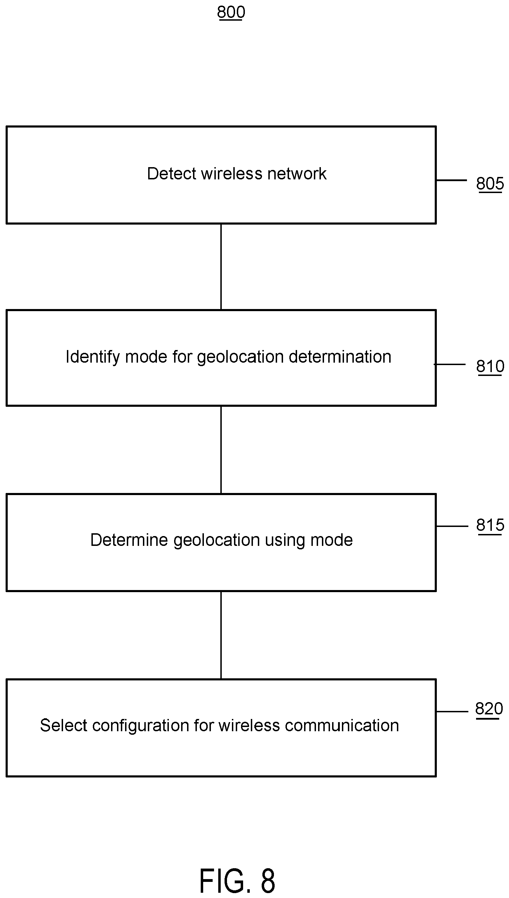

Turning now to FIG. 8, an example flow diagram of a method 800 for selecting and applying configurations for wireless communications of a UE 120 based on the region in which the UE 120 is located is illustrated. The method 800 can be performed by a system having one or more processors configured to perform operations of the system features and examples discussed in connection with FIGS. 1-6 by executing computer-readable instructions stored on a memory. The method can be implemented using a non-transitory computer readable medium storing instructions which, when executed by one or more processors, cause the one or more processors to implement operations of the method 800. For instance, the method 800 can be implemented one or more processors 112 or 416 of a computing system executing non-transitory computer-readable instructions stored on a memory (e.g., the memory 116).

The method 800 can include operations 805-820. At operation 805, the method can include a UE device detecting a wireless network. At operation 810, the method can include UE identifying a mode for geolocation determination. At operation 815, the method can include the UE determining geolocation using the mode. At operation 820, the method can select a configuration for wireless communication.

At operation 805, the method can include a UE device detecting a wireless network. The method can include one or more processors of a wireless communication device detecting a wireless network of an access point (AP). The one or more processors can be coupled with memory and can be comprised within the wireless communication device that is a user equipment (LTE) device, such as a AR or VR device, a smartphone device, a wearable device (e.g., a smart watch), a tablet, a smart glasses device, a head wearable device, a mobile hotspot device, or a wireless access point. The AP can include a base station of cellular network or an AP of a WLAN, such as a Wi-Fi router. The AP can be configured to support wireless communication according to a plurality of configurations. The plurality of configurations can include configurations for wireless communications via the wireless network of the AP. For example, the plurality of configurations can include the configurations for a WLAN. For example, the plurality of configurations can include the configurations for a cellular network.

The method can include the one or more processors detecting a signal of the wireless network of the AP that includes a Wireless Fidelity (Wi-Fi) or WLAN device or a cellular network device. The signal can include a signal of a WLAN of a Wi-Fi network. The method can include the one or more processors detecting a signal of the wireless network of the AP that is configured for cellular network communication. The signal can include a cellular network signal. The method can include detecting a signal of a Bluetooth coverage area of another UE device within range of the UE device.

At operation 810, the method can include UE identifying a mode for geolocation determination. The method can include the one or more processors of the wireless communication device identifying, based at least on a plurality of weights for a plurality of modes for geolocation determination, a mode of the plurality of modes corresponding to a weight of the plurality of weights. For instance, the UE device can identify a geolocation mode from the plurality of geolocation modes based on a weight of the identified geolocation mode.

The method can include determining weights of the plurality of geolocation modes and using the determined weights to determine which one or more geolocation modes of the plurality of geolocation modes are to be used to determine the location of the UE device. The weights can be determined based on various signal and reliability data of the signals or systems utilized for the given geolocation modes. For instance, the one or more processors can determine the one or more weights for the one or more geolocation modes to use based on, or using, at least one of: a strength of a signal of at least one of navigation satellite system or a cellular network, an error rate of the signal of at least one of the navigation satellite system or the cellular network, or access to a wireless local area network (WLAN) positioning system or an internet protocol (IP) address.

The plurality of geolocation modes can include at least two of: a mode for geolocation determination using a navigation satellite system, a mode for geolocation determination using a code received from a cellular network, a mode for geolocation determination using a wireless local area network (WLAN) positioning system, a mode for geolocation determination using an internet protocol (IP) address of the wireless communication device and a mode for geolocation determination using a Bluetooth signal. For example, a UE device can determine the weight of a MCC geolocation mode based on the reliability or strength of the signal of the cellular network from which an MCC has been received. For example, a UE device can determine the weight of a GNSS geolocation mode based on at least one of a strength or reliability of the GNSS signal. The method can include the one or more processors identifying, based on the plurality of weights, a second mode of the plurality of modes corresponding to a second weight of the plurality of weights for a second geolocation mode.

At operation 815, the method can include the UE device determining geolocation using the mode. The method can include the one or more processors determining a geolocation of the AP using the mode and the weight. For instance, the UE device can determine the geolocation (e.g., location identifier of the UE device) using the geolocation mode selected based on determining that the weight of the geolocation mode has a value that is larger than values of all other weights of the plurality of the geolocation modes.

The UE device can determine the location identifier of the UE device using a combination of two geolocation modes whose respective weights exceed a threshold. For instance, the geolocation function can compare the weights of each of the plurality of the geolocation modes against a threshold for the weights of the modes. In response to two or more weights exceeding the threshold for the weights of the modes, the geolocation function can apply the weights in their respective ratios so as to weigh the determination of each of the two or more geolocation modes based on their respective weights. The method can include the one or processors determining the geolocation (e.g., location identifier) of the base station or the AP whose using the second mode and the second weight alongside the mode and the weight of the geolocation mode having the highest weight.

The method can include the one or more processors selecting, from the plurality of modes, one or more modes responsive to the detection of the signal. The one or more modes can be selected based on the weights of the one or more modes exceeding a threshold for the weights. The threshold can include a predetermined threshold to filter out the modes whose signals or system performance reliability is low (e.g., below the threshold of the weight). For example, the geolocation function of the UE device can determine the location identifier (e.g., region, state, country or area) based on any combination of one or more geolocation modes determining the location identifier, using the determined weights of each of the geolocation modes as a parameter on which to select those geolocation modes whose determination is most likely to be accurate or reliable.

At operation 820, the method can select a configuration for wireless communication. The method can include the one or more processors selecting, based at least on the geolocation of the AP, a configuration of the plurality of configurations to use for wireless communication with the AP. For instance, the UE device can identify or select a set of configurations that are available for a location (e.g., region, state, area or a country) based a regulation for the identified location. The method can include the one or more processors selecting, based at least on the geolocation of the AP, for the configuration, a communication band of a plurality of communication bands. The selected band can include a frequency range for wireless communication via the AP, such as a WLAN band or a cellular network band. The method can include the one or more processors configuring the wireless communication device according to the configuration to use the communication band for wireless communication between the wireless communication device and the AP.

The method can include the one or more processors, based at least on the geolocation of the AP, for the configuration, a channel of a plurality of channels of a communication band. The channel can include a range of frequencies within a band of the plurality of bands available for wireless communication with the AP. The method can include the one or more processors configuring the wireless communication device according to the configuration to use the channel for wireless communication between the wireless communication device and the AP.

The method can include the one or more processors selecting, based at least on the geolocation of the AP, for the configuration, a power level from a plurality of power levels for transmission of wireless communications. The power level can include a transmission power level for a given wireless communication within a wireless band or a wireless communication channel. The one or more processors can configure the wireless communication device according to the configuration to transmit communications of the wireless communication device to the AP at the power level.

The method can include the one or more processors selecting, based at least on the geolocation of the AP, for the configuration, any one or more of: a quality of service (QoS) setting for wireless communication with the AP, a security setting (e.g., encryption setting) or a roaming setting for the wireless communication. The QoS setting, the security setting or the roaming setting can be applied for a given wireless network (e.g., WLAN or cellular network) of the AP. The one or more processors can configure the wireless communication device according to the configuration utilizing the QoS setting, the security setting or the roaming setting.

Having now described some illustrative implementations, it is apparent that the foregoing is illustrative and not limiting, having been presented by way of example. In particular, although many of the examples presented herein involve specific combinations of method acts or system elements, those acts, and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general-purpose processor may be a microprocessor, or any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or nonvolatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general-purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the appended claims.

References herein to the positions of elements (e.g., "top," "bottom," "above," "below") are merely used to describe the orientation of various elements in the FIGURES. The orientation of various elements may differ according to other exemplary embodiments, and that such variations are intended to be encompassed by the present disclosure.

## Claims

1. A wireless communication device, comprising:
at least one processor configured to:
detect a wireless network of an access point (AP) configured to support wireless communication according to a plurality of configurations;
identify, based at least on a plurality of weights for a plurality of modes for geolocation determination, a mode of the plurality of modes corresponding to a weight of the plurality of weights;
determine a geolocation of the AP using the mode and the weight; and
select, based at least on the geolocation of the AP, a configuration of the plurality of configurations to use for wireless communication with the AP.

2. The wireless communication device of claim 1, wherein the at least one processor is configured to:
detect a signal of the wireless network of the AP that includes a wireless local area network (WLAN) or cellular network device; and
select, from the plurality of modes, one or more modes responsive to the detection of the signal.

3. The wireless communication device of claim 1 or 2, wherein the plurality of modes includes at least two of: a mode for geolocation determination using a navigation satellite system, a mode for geolocation determination using a code received from a cellular network, a mode for geolocation determination using a wireless local area network (WLAN) positioning system, a mode for geolocation determination using an internet protocol (IP) address of the wireless communication device and a mode for geolocation determination using a Bluetooth signal.

4. The wireless communication device of any preceding claim, wherein the at least one processor is configured to:
determine one or more weights of the plurality of weights using at least one of: a strength of a signal of at least one of navigation satellite system or a cellular network, an error rate of the signal of at least one of the navigation satellite system or the cellular network, or access to a wireless local area network (WLAN) positioning system or an internet protocol (IP) address.

5. The wireless communication device of any preceding claim, wherein the at least one processor is configured to:
identify, based on the plurality of weights, a second mode of the plurality of modes corresponding to a second weight of the plurality of weights; and
determine the geolocation of the AP using the second mode and the second weight.

6. The wireless communication device of any preceding claim, wherein the at least one processor is configured to:
select, based at least on the geolocation of the AP, for the configuration, a communication band of a plurality of communication bands; and
configure the wireless communication device according to the configuration to use the communication band for wireless communication between the wireless communication device and the AP; and/or
select, based at least on the geolocation of the AP, for the configuration, a channel of a plurality of channels of a communication band; and
configure the wireless communication device according to the configuration to use the channel for wireless communication between the wireless communication device and the AP; and/or
select, based at least on the geolocation of the AP, for the configuration, a power level from a plurality of power levels for transmission of wireless communications; and
configure the wireless communication device according to the configuration to transmit communications of the wireless communication device to the AP at the power level.

7. The wireless communication device of any preceding claim, wherein the wireless communication device is one of: a smart glasses device, a head wearable device, a smartphone device, a mobile hotspot device, or a wireless access point.

8. A method, comprising:
detecting, by one or more processors of a wireless communication device, a wireless network of an access point (AP) configured to support wireless communication according to a plurality of configurations;
identifying, by the one or more processors, based at least on a plurality of weights for a plurality of modes for geolocation determination, a mode of the plurality of modes corresponding to a weight of the plurality of weights;
determining, by the one or more processors, a geolocation of the AP using the mode and the weight; and
selecting, by the one or more processors, based at least on the geolocation of the AP, a configuration of the plurality of configurations to use for wireless communication with the AP.

9. The method of claim 8, comprising:
detecting, by the one or more processors, a signal of the wireless network of the AP that includes a wireless local area network (WLAN) or cellular network device; and
selecting, by the one or more processors, from the plurality of modes, one or more modes responsive to the detection of the signal.

10. The method of claim 8 or 9, wherein the plurality of modes includes at least two of: a mode for geolocation determination using a navigation satellite system, a mode for geolocation determination using a code received from a cellular network, a mode for geolocation determination using a wireless local area network (WLAN) positioning system, a mode for geolocation determination using an internet protocol (IP) address of the wireless communication device and a mode for geolocation determination using a Bluetooth signal.

11. The method of any of claims 8 to 10, comprising:
determining, by the one or more processors, one or more weights of the plurality of weights using at least one of: a strength of a signal of at least one of navigation satellite system or a cellular network, an error rate of the signal of at least one of the navigation satellite system or the cellular network, or access to a wireless local area network (WLAN) positioning system or an internet protocol (IP) address; and/or:
identifying, by the one or more processors, based on the plurality of weights, a second mode of the plurality of modes corresponding to a second weight of the plurality of weights; and
determining, by the one or more processors, the geolocation of the AP using the second mode and the second weight.

12. The method of any of claims 8 to 11, comprising:
selecting, by the one or more processors, based at least on the geolocation of the AP, for the configuration, a communication band of a plurality of communication bands; and
configuring, by the one or more processors, the wireless communication device according to the configuration to use the communication band for wireless communication between the wireless communication device and the AP; and/or
selecting, by the one or more processors, based at least on the geolocation of the AP, for the configuration, a channel of a plurality of channels of a communication band; and
configuring, by the one or more processors, the wireless communication device according to the configuration to use the channel for wireless communication between the wireless communication device and the AP; and/or
selecting, by the one or more processors, based at least on the geolocation of the AP, for the configuration, a power level from a plurality of power levels for transmission of wireless communications; and
configuring, by the one or more processors, the wireless communication device according to the configuration to transmit communications of the wireless communication device to the AP at the power level.

13. The method of any of claims 8 to 12, wherein the wireless communication device is one of: a smart glasses device, a head wearable device, a smartphone device, a mobile hotspot device, or a wireless access point.

14. A non-transitory computer-readable media having processor readable instructions, such that, when executed, cause a processor to:
detect a wireless network of an access point (AP) configured to support wireless communication according to a plurality of configurations;
identify, based at least on a plurality of weights for a plurality of modes for geolocation determination, a mode of the plurality of modes corresponding to a weight of the plurality of weights;
determine a geolocation of the AP using the mode and the weight; and
select, based at least on the geolocation of the AP, a configuration of the plurality of configurations to use for wireless communication with the AP.

15. The non-transitory computer readable medium of claim 14, wherein the processor is configured to:
detect a signal of the wireless network of the AP that includes a Wireless Fidelity (Wi-Fi) device; and
select, from the plurality of modes, one or more modes responsive to the detection of the signal, wherein the plurality of modes includes at least two of: a mode for geolocation determination using a navigation satellite system, a mode for geolocation determination using a code received from a cellular network, a mode for geolocation determination using a wireless local area network (WLAN) positioning system, a mode for geolocation determination using an internet protocol (IP) address of the wireless communication device and a mode for geolocation determination using a Bluetooth signal.
